# EUROPEAN PATENT APPLICATION

(11) **EP 1 961 494 A1**
(43) Date of publication of application: **27.08.2008**
(21) Application number: 05817627.2
(22) Date of filing: 08.12.2005
(51) Int. Cl.: B08B 15/04, B05B 15/12, B01D 53/74, B05C 11/10, C02F 103/14

(54) **WASTE TREATMENT STRUCTURE OF SPRAYING MACHINE**

(71) Applicant: Kinglion Finishing Equipment Co., Ltd., Taichung, 412 (TW)
(72) Inventor: HSIEH, Yichen, Taichung, 412 Taiwan (CN)
(74) Representative: Lang, Christian
(86) International application number: PCT/CN2005/002118
(87) International publication number: WO 2007/065298

(57) **Abstract**

A coating machine is provided with an exhaust processor. The exhaust processor includes a collator and a pumping and filtering unit. The collector includes a conduit disposed therein, a drawer movable therein under the funnel and at least one vent defined therein. A lower end of the funnel extends into the drawer so that when exhaust goes into the drawer from the conduit, a major portion of paint carried in the exhaust deposits in the drawer. The pumping and filtering unit includes a filter, at least one pipe and a pump. The pipe connects the filter to the vent. The pump pumps the exhaust to the environment from the coating chamber through the exhaust processor.

## Description

### FIELD OF INVENTION

The present invention relates to a coating machine and, more particularly, to an exhaust processor for a coating machine.

### BACKGROUND OF INVENTION

A sprayer is often used to spray paint onto an object. Some of the paint is coated on the object as expected. The other paint is however undesirably released to the environment. The paint contains a lot of toxic chemical substances and imposes a great danger on the environment and humans. To protect the environment and humans, the coating is often conducted in a closed chamber. A coating machine includes a closed coating chamber, a sprayer disposed in the coating chamber and a belt conveyor for bring an object into the coating chamber before the coating and out of the coating chamber after the coating.

The coating machine is often equipped with an exhaust processor including a pumping unit and a filtering unit. The pumping unit vents exhaust from the coating chamber. The filtering unit filters the exhaust. The filtering unit includes a filter in the form of a web. A considerable portion of the paint however accumulates in the filtering unit and, more particularly, in the filter. Since the paint is sticky, it is difficult to remove the paint from the filter. The filter has to be replaced with a new one often. The cost is high. Moreover, fine toxic substances and odor cannot be removed. Hence, a considerable amount of toxic substances enter the environment and hurt the environment and humans.

The present invention is therefore intended to obviate or at least alleviate the problems encountered in prior art.

### SUMMARY OF INVENTION

It is the primary objective of the present invention to provide a coating machine with a simple and efficient exhaust processor.

According to the present invention, the exhaust processor includes a collator and a pumping and filtering unit. The collector includes a conduit disposed therein, a drawer movable therein under the funnel and at least one vent defined therein. A lower end of the funnel extends into the drawer so that when exhaust goes into the drawer from the conduit, a major portion of paint carried in the exhaust deposits in the drawer. The pumping and filtering unit includes a filter, at least one pipe and a pump. The pipe connects the filter to the vent. The pump pumps the exhaust to the environment from the coating chamber through the exhaust processor.

Other objectives, advantages and features of the present invention will become apparent from the following description referring to the attached drawings.

### BRIEF DESCRIPTION OF DRAWINGS

The present invention will be described via the detailed illustration of the preferred embodiment referring to the drawings.
Fig. 1 is a perspective view of a coating machine equipped with an exhaust processor according to the preferred embodiment of the present invention.
Fig. 2 is an exploded view of the exhaust processor shown in Fig. 1.
Fig. 3 is a cut-away view of the exhaust processor shown in Fig. 2.
Fig. 4 is a top view of the exhaust processor shown in Fig. 2.
Fig. 5 is an exploded view of a pumping and filtering unit of the exhaust processor shown in Fig. 2.
Fig. 6 is a partially cross-sectional view of the venting and filter unit shown in Fig. 5.
Fig. 7 is a front view of the exhaust processor shown in Fig. 2.
Fig. 8 is a side view of the exhaust processor shown in Fig. 2.

### DETAILED DESCRIPTION OF PREFERRED EMBODIMENT

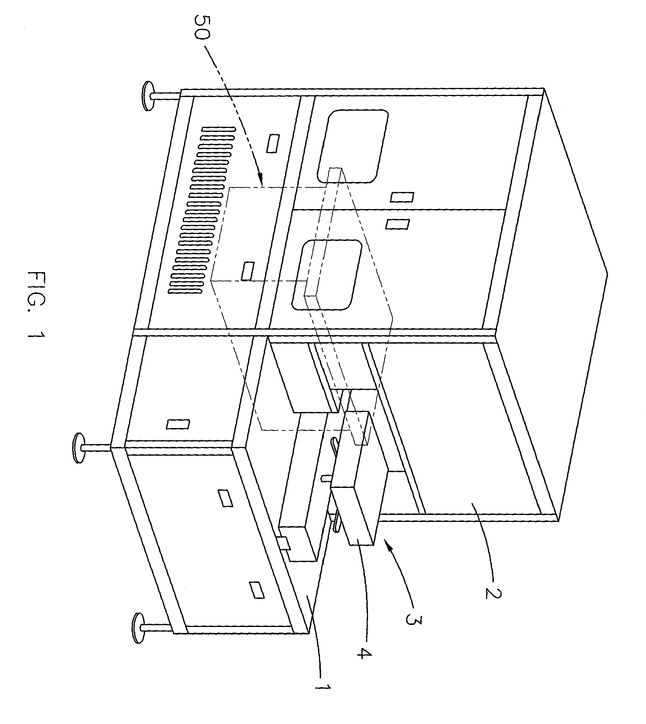

Referring to Fig. 1, there is shown a coating machine equipped with an exhaust processor according to the preferred embodiment of the present invention. The coating machine includes a table 1, a coating chamber 2 provided on the table 1, a conveyor 3 for conveying an object 4 into the coating chamber 2 before coating and out of the coating chamber 2 after the coating. Although not shown, disposed in the coating chamber 2 is a sprayer for spraying paint onto the object 4.

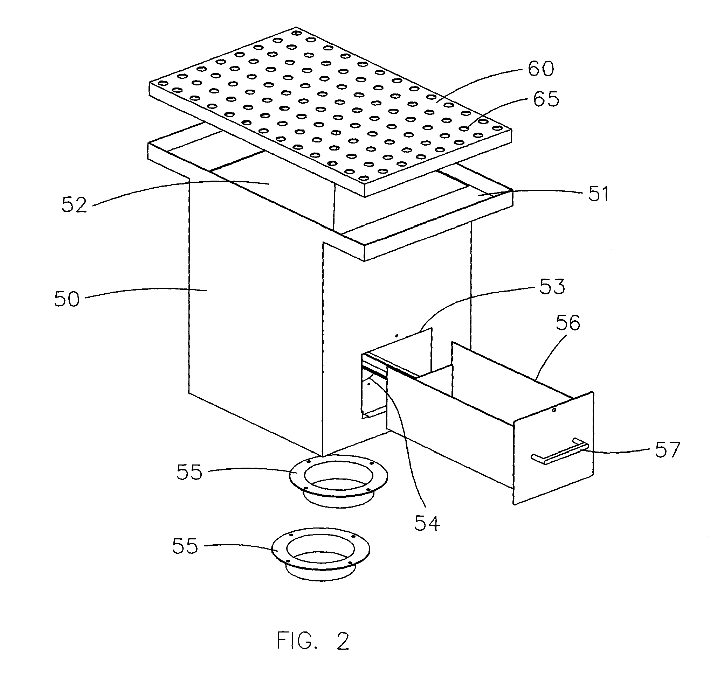

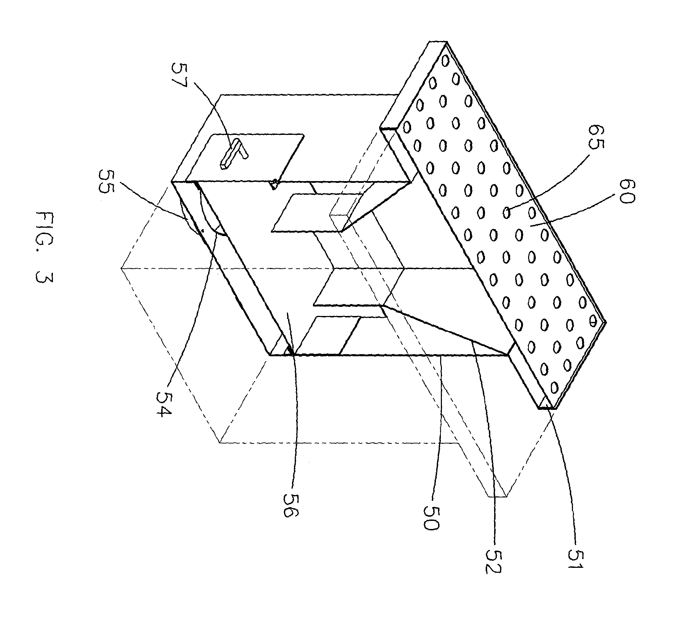

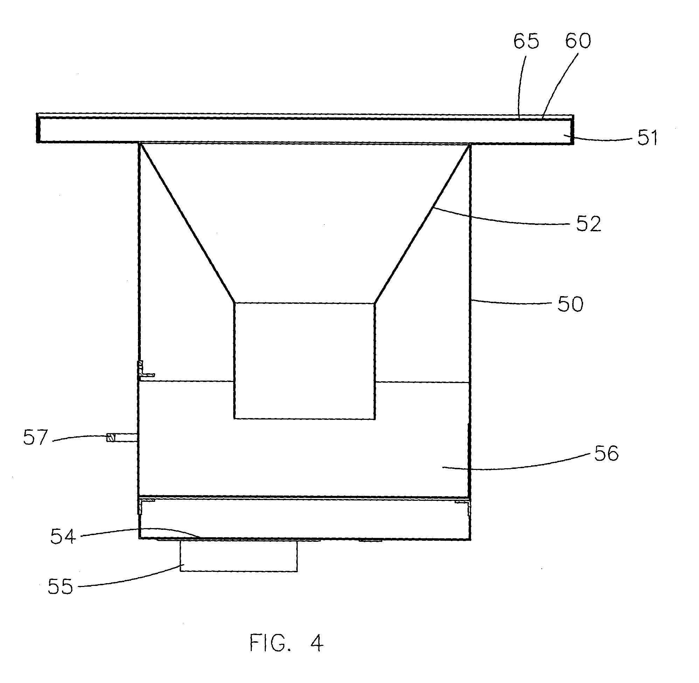

Referring to Figs. 2 to 4, the exhaust processor includes a collector 50, a sieve 60 and a pumping and filtering unit 70. The collector 50 includes a shell, two lips 51, a conduit 52, a drawer 56 and two joints 55. The shell includes an opening 53 defined in the periphery thereof and two vents 54 defined in a lower plate of the shell. The lips 51 are provided on the shell. The sieve 60 is supported on the lips 51. The conduit 52 is disposed in the shell. The conduit is preferably in the form of a funnel for efficient transfer. The drawer 56 is movable into and out of the shell through the opening 53. When inserted in the shell, the drawer 56 is located under the conduit 52. The drawer 56 includes two lateral walls. The upper edges of the lateral walls of the drawer 56 are located higher than a lower end of the conduit 52. The drawer 56 is equipped with a handle 57 for facilitating the moving of the drawer 56. Each of the joints 55 is connected to the shell around a related one of the vents 54.

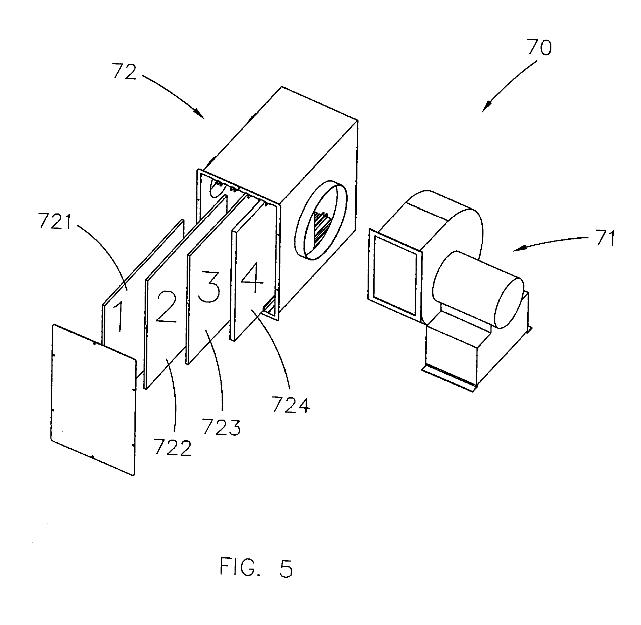

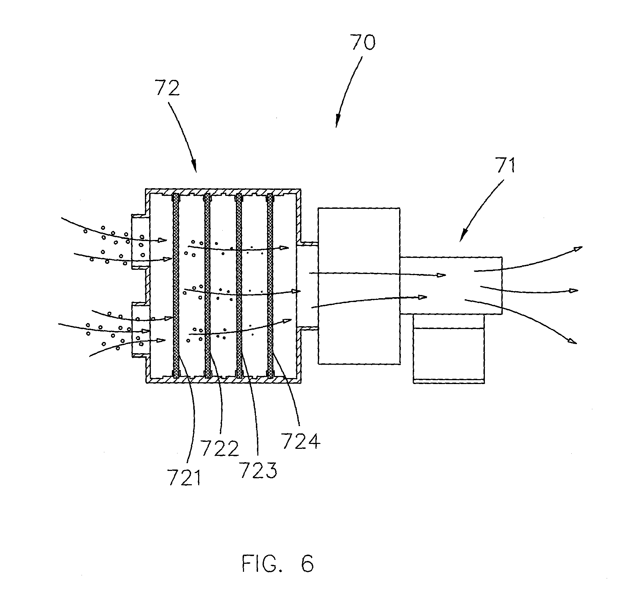

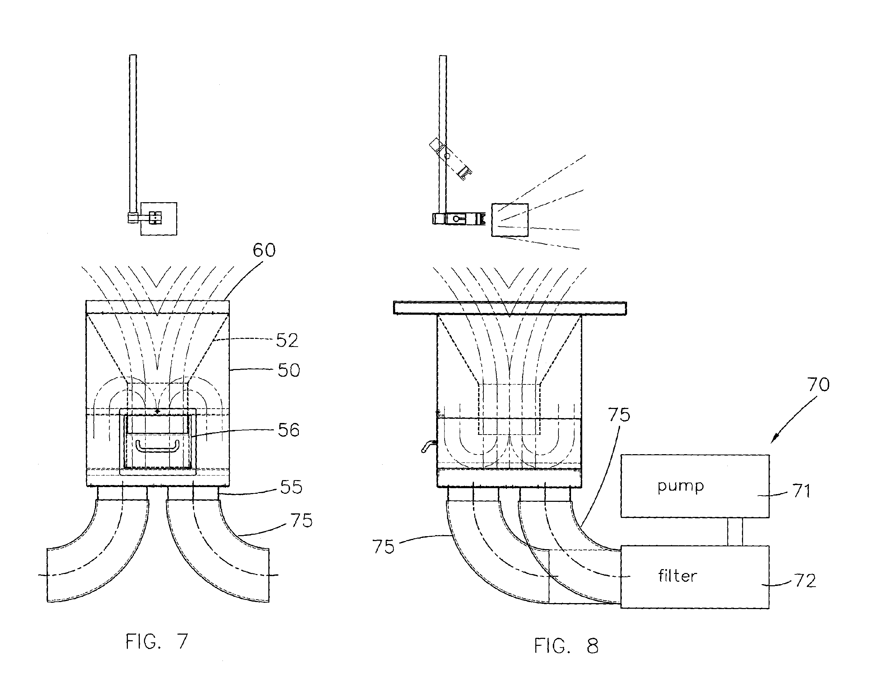

Referring to Figs. 5 and 6, the pumping and filtering unit 70 includes a pump 71 and a filter 72. The pump 71 is connected to the joints 55 via pipes 75 (Figs. 7 and 8). The filter 72 includes a filtering screen 721, a high-density screen 722, a non-woven web 723 and an active carbon web 724. The filtering screen 721, the high-density screen 722, the non-woven web 723 and the active carbon web 724 are disposed in a case, parallel to one another. The filtering screen 721, the high-density screen 722 and the non-woven web 723 are used to filter paint and toxic fine particles. The active carbon web 724 is used to absorb volatile gases and odor.

Referring to Figs. 6 to 8, the operation of the exhaust processor will be described. The pump 71 is used to pump exhaust to the environment from the coating chamber 2 through the exhaust processor. The exhaust goes through apertures 65 defined in the sieve 60. Then, the exhaust goes into the drawer 56 through the conduit 52. Paint deposit in the drawer 56. Without the paint, the exhaust goes upwards over the lateral walls of the drawer 56. The exhaust goes through the vents 54. Then, the exhaust goes into the filter 72. Toxic particles, volatile gases and odor are filtered or absorbed with the filter 72.

Advantageously, the paint has deposited in the drawer 56 before the rest of the waste reaches the filter 72. The paint does not stick and clog the filter 72. The filter 72 can efficiently process the exhaust but the paint. The filtering screen 721, the high-density screen 722, the non-woven web 723 and the active carbon web 724 of the filter 72 do not have to be replaced with new ones often. Furthermore, the drawer 56 can be cleaned.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. An exhaust processor for a coating machine, the exhaust processor comprising:
a collector disposed in the coating machine and comprised of:
a conduit disposed therein;
a drawer movable therein under the funnel so that a lower end of the funnel extends into the drawer so that when exhaust goes into the drawer from the conduit, a major portion of paint carried in the exhaust deposits in the drawer; and
at least one vent defined therein; and
a pumping and filtering unit comprising:
a filter;
at least one pipe for connect the filter to the vent; and
a pump for pumping the exhaust to the environment from the coating chamber through the exhaust processor.

2. The exhaust processor according to claim 1 comprising at least one sieve provided on the collector.

3. The exhaust processor according to claim 2, wherein the collector comprises two lips formed thereon for supporting the sieve.

4. The exhaust processor according to claim 1, wherein the conduit is in the form of a funnel for efficient transfer of the exhaust.

5. The exhaust processor according to claim 1, wherein the drawer comprises a handle attached thereto for easy moving thereof.

6. The exhaust processor according to claim 1, wherein the collector comprises a joint for airtight connection of the filter to the vent of the collector.

7. The exhaust processor according to claim 1, wherein the filter comprises a filtering screen, a high-density screen, a non-woven web and an active carbon web so that the filtering screen, the high-density screen and the non-woven web and filter toxic fine particles and a minor portion of the paint and that the active carbon web can absorb volatile gases and odor.
